Europäisches Patentamt

European Patent Office

Office européen des brevets

(11) Publication number : **0 478 213 A2**

## (12) EUROPEAN PATENT APPLICATION

(21) Application number : **91308504.9**

(22) Date of filing : **18.09.91**

(51) Int. Cl.⁵ : **H04Q 7/04, H04B 7/26, G08B 3/10**

(30) Priority : **26.09.90 GB 9020964**

(43) Date of publication of application :
**01.04.92 Bulletin 92/14**

(84) Designated Contracting States :
**AT BE CH DE DK ES FR GR IT LI LU NL SE**

(71) Applicant : **GPT LIMITED**
**New Century Park P.O. Box 53**
**Coventry, CV3 1HJ (GB)**

(72) Inventor : **Webster, Geoffrey**
**48 John Mcguire Crescent**
**Coventry CV3 2QG (GB)**
Inventor : **Heaton, Julian Charles**
**18 Belgrave Drive,**
**Brownsover East, Rugby CV21 1TJ (GB)**

(74) Representative : **Branfield, Henry Anthony**
**The General Electric Company plc Patent**
**Department(Wembley Office) Hirst Research**
**Centre East Lane**
**Wembley, Middlesex HA9 7PP (GB)**

(54) **Cordless communication system.**

(57)    The invention concerns cordless Communication Systems and enables cordless subscribers to make and receive calls to other cordless subscribers. Each cordless hand set (9) includes a pager device (17) which can co-operate with a parallel pager system (14). A mobile telephone facility 10 holds a look-up table for associating pager network identification with individual handsets.

EP 0 478 213 A2

Jouve, 18, rue Saint-Denis, 75001 PARIS

# Fig.2.

The present invention concerns what are known as Cordless Communication Systems. Such systems interface with the normal Public Switched Telephone Network (PSTN) and comprise a number of base stations linked to PSTN local exchanges. Users of the system each have a cordless handset which becomes functional when the user comes within range of a base station. This range may for example be around 200 metres and once within range the user can access the system by pressing a simple key sequence on the handset to establish a radio link with the base station. The base station authenticates the handset and if this is acceptable, the base station asks the user to dial the required number. Once this has been dialled the base station checks the number and if the caller is authorised the call is then set up using the PSTN network.

It will be appreciated that the known system just described basically provides a facility for a caller to dial the number of a normal subscriber to the PSTN network. Thus a major restriction of the system is its inability to support incoming calls to the cordless handsets. This problem becomes particularly severe when the originating caller is also calling from a cordless telephone.

Accordingly an object of the present invention is to provide a telecommunications system in which there can be two-way communication between users in which one or both of the users has a cordless telephone handset.

Accordingly from one aspect the present invention comprises a cordless telephone system having base stations connected to a telephony network and associated with cordless handsets, and wherein each cordless handset includes a pager device capable of co-operating with a pager network.

Preferably each handset includes a memory for storing a number transmitted via the pager network, and having means for dialling the stored number via an adjacent base station.

From a second aspect the invention comprises a handset for a cordless telephone system having an integrated pager for use with a parallel pager network

In order that the invention may be more readily understood an embodiment thereof will now be described by way of example and with reference to the accompanying drawings, in which;

    Figure 1 is a diagrammatic view of a telecommunication network, and

    Figure 2 is a circuit diagram of a two-way telecommunication system according to the present invention.

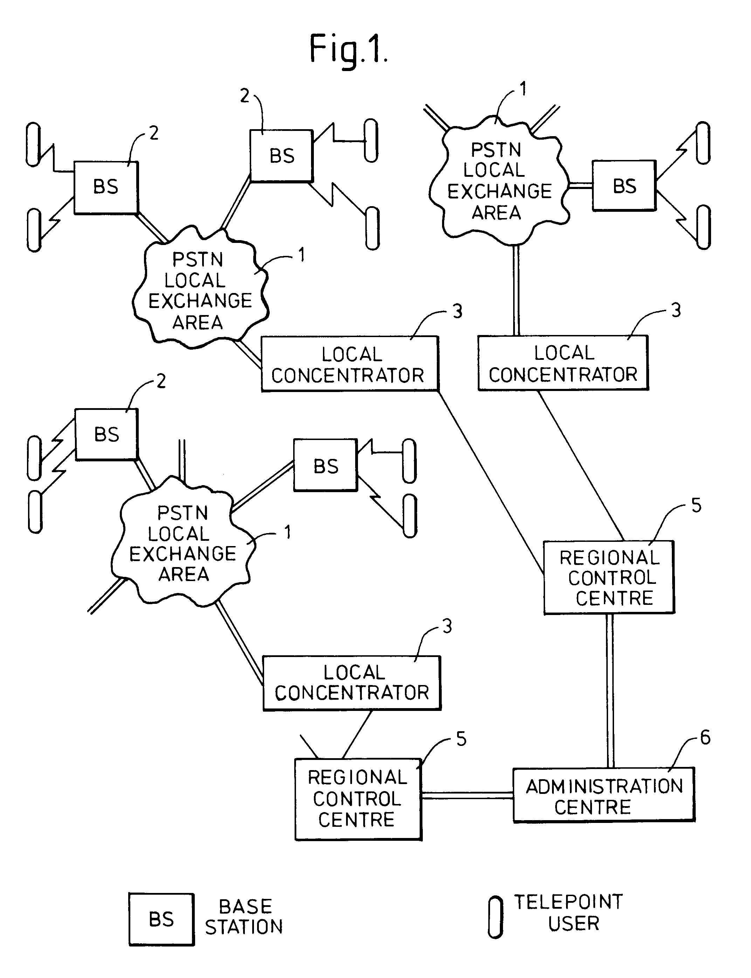

Referring now to Figure 1 of the drawings this shows the architecture of a cordless telephone network. As shown in the figure this network comprises a number of PSTN local exchanges shown at 1. As the cordless telecommunication network is superimposed on the standard PSTN network the latter will not be described in any detail. Associated with each local exchange 1 is one or more base stations 2 each capable of establishing radio links with handsets which come within its effective radius of approximately 200 metres. The various local exchanges 1 are connected to local concentrators 3 in turn connected to regional control centres 5 linked to a common administration centre 6. It will be appreciated that this system architecture is already known and that variants of it are possible.

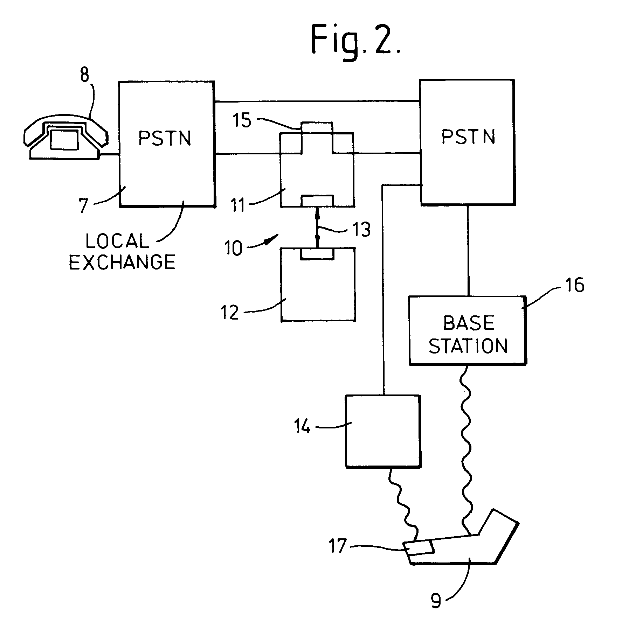

Referring now to Figure 2 of the drawings this shows a system by means of which a subscriber to the normal PSTN can call subscriber to the cordless network. In this figure a local exchange of the PSTN network is shown at 7 and the handset of a subscriber wishing to make a call is shown at 8. The handset is associated with a base station 16. For the purposes of this embodiment it is assumed that the handset 9 of the cordless subscriber not only has facilities for co-operating with the cordless network such as a keyboard for dialling but a display 18, a memory store 19 and an integrated pager 17. To initiate the call the originating subscriber dials the PSTN where the call is transferred to a mobile telephone facility generally indicated at 10. This facility 10 in essence consists in a switch 11 associated with a processor 12 via an appropriate interface 13. The facility 10 associates the incoming number, through a look-up table held in memory 22, with a pager identity held in a parallel and conventional pager system generally indicated at 14. The incoming call is held in the facility 10 at a holding point 15 whilst the pager system 14 pages the desired subscriber with the calling number of the facility 10. The nature of the holding point will be described in greater detail hereinafter. The receipt of the paging message is indicated on the handset display 18 and at the same time the transmitted facility number is stored in the memory 19 in the handset. Provided that the recipient is within range of the nearest base station he can cause his handset 9 to dial the facility number already stored by pressing one or more keys on the keyboard of the handset.

The memory 19 in the handset can be capable of storing several incoming messages in order of priority and that these can be displayed in such a way that the recipient can make a choice of the number to be answered first. Once the recipient has dialled the return number to his adjacent base station this is transferred to the facility 10 where it is connected to the previously established holding point 15 therefore completing a link between the two subscribers. It is of course possible that due to delay the recipient does not return the paging call until after the original subscriber has called off. In the present embodiment if the original call has been disconnected by a FULL RELEASE the responding call will be connected to a pre-recorded message stating that the other party has cleared.

The above description has assumed that the handsets include visible displays. Should there be no visible display then the presence of a paging call can be indicated audibly. In such a case the subscriber being called would have no indication as to the origin of the paging call so that returning the call would be on a "blind" basis.

If the cordless subscriber successfully answers the incoming call, the entry in the handset store can be marked as answered, but would be available for re-selection. When the store in the handset becomes full the oldest answered number is dropped. When an already answered number is re-selected, it becomes the youngest answered number. If there are no answered numbers to be dropped then the oldest unanswered number will be dropped. When the store becomes full of unanswered numbers it will give a warning which may be visual and/or audible.

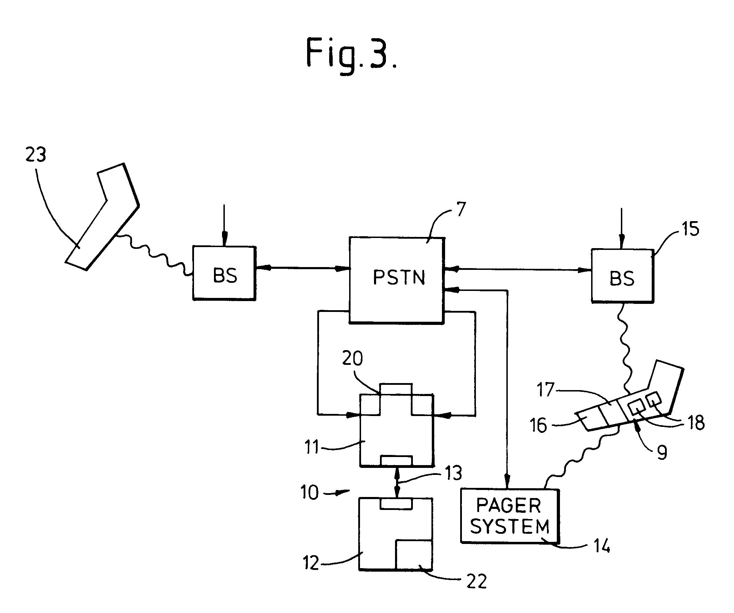

Referring now to Figure 3 of the drawings, this shows how the embodiment described with reference to Figure 2 can be expanded to incorporate cordless to cordless calling. The procedure to be followed is complicated by the fact that neither end of the requested link can accept incoming calls. Thus in this second embodiment when one cordless subscriber wishes to call another cordless subscriber the mobile facility 10 is called by the would be caller 23 using a special number and the number of the called subscriber is signalled to the answering equipment. The original call is then connected to a call holding point 20. The called cordless subscriber number is translated via a look-up table in the facility into a pager number. The called subscriber pager is then contacted as in the previous embodiment but with a reserved number of the facility as the recall number. The called cordless subscriber then moves to within range of a base station 15 and activates a recall sequence as in the previous embodiment. When the facility 10 answers the identity of the called party is transferred and this number is used to look up the call holding point 20 where the originating call is held. If the original call has been disconnected by a FULL RELEASE the responding call will be connected to a pre-recorded message "the other party has cleared". If the originating call was cleared with a HOLD details of the calling party are passed to the facility and when the called party does contact the facility the originating subscriber is paged in the reverse direction.

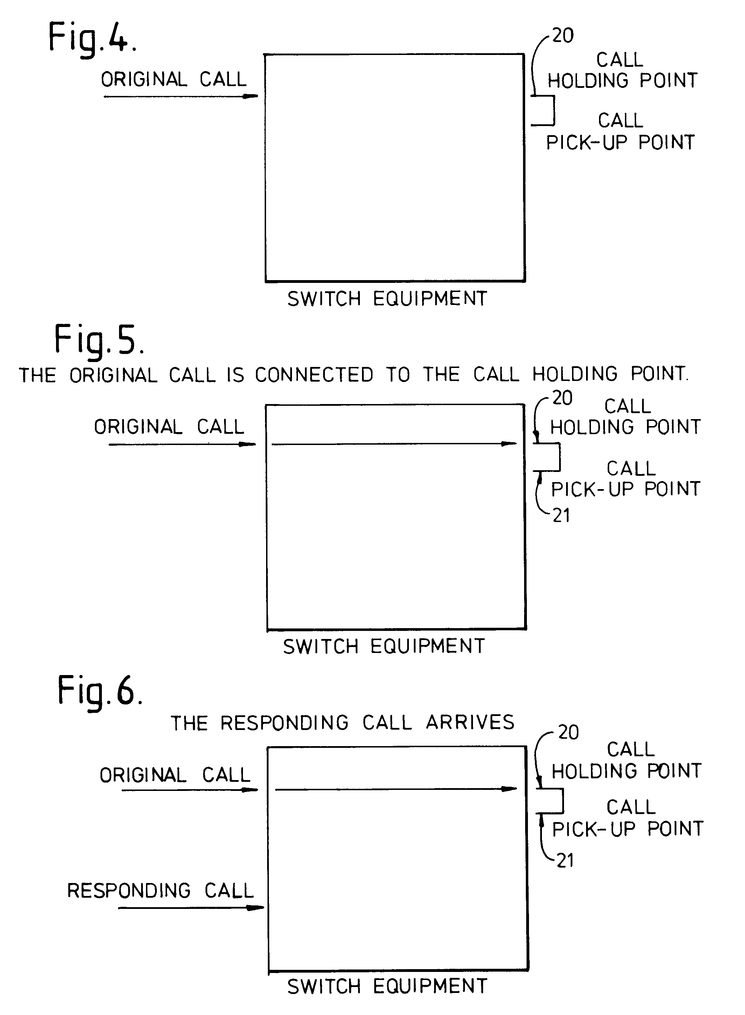

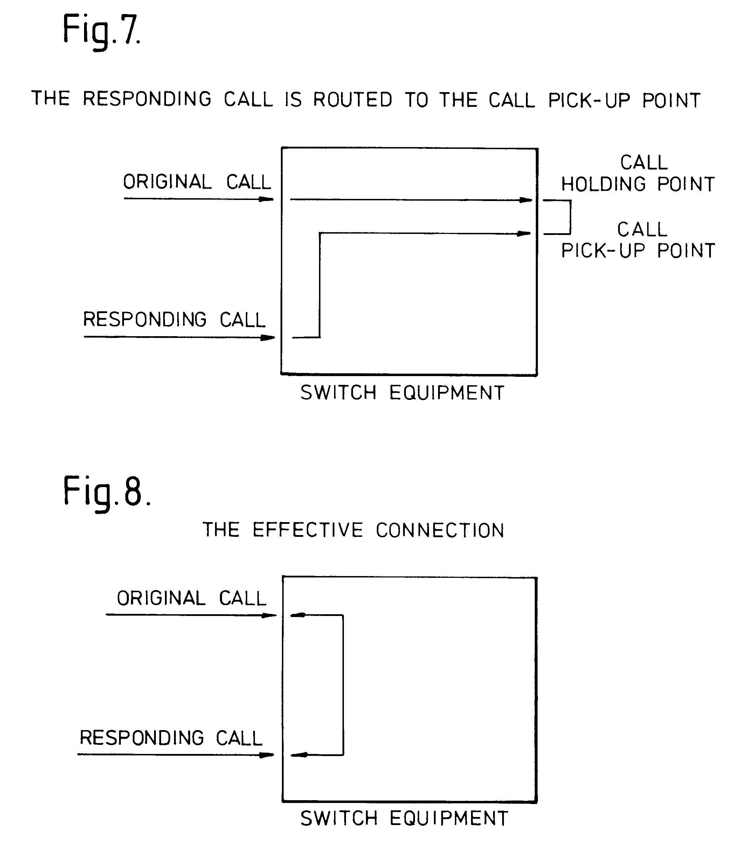

Referring now to figures 4, 5, 6, 7 and 8 of the drawings, these show sequences in the operation of a call holding point such as the call holding point shown in Figure 3. A call holding point is a virtual location within a telephone switch and is in effect an extension port. When a call is attached to a holding point its signalling capability is restricted to clearing of the call which may be done in various ways. When a call is connected to a corresponding call pick-up point the two calls are in effect through connected. This is the sequence shown in Figures 4 to 8. Thus in Figure 4 an original call arrives at the switch equipment and as shown in Figure 5 is connected to a call holding point 20. Figure 6 shows the arrival of a responding call at the switch equipment and this call is routed in Figure 7 to a call pick-up point 21. Figure 7 shows the effective connection between the original call and the responding call. In the simplest of switches, the call holding point could be realised as a loop between extension ports. In more advanced switches the original and responding ports could be directly connected through the switch.

## Claims

1. A cordless telephone system having a plurality of base stations (15) connected to a telephony network (7), the base stations (15) being associated with cordless handsets (9), and characterised in that each base station (15) is associated with a pager system (14) capable of co-operating with a pager network, each cordless handset including a pager device (17) capable of co-operating with the pager system ( 14).

2. A system as claimed in Claim 1, and further characterised in that each handset has a display (18) and a memory (19), the receipt of a paging message being shown on the display.

3. A system as claimed in Claim 2, and further characterised in that each base station (15) is associated with a mobile telephone facility (10) containing a look-up table held in a memory (22) for associating an incoming call with the pager identity of a particular handset, and a holding point (15) for holding the incoming call.

4. A system as claimed in Claim 3, and further characterised in that the memory (19) in each handset is capable of storing a plurality of incoming messages in order of priority.

5. A system as claimed in any one of the preceding claims, and further characterised in that a cordless subscriber is capable of making a call to another cordless subscriber, the system being operative to correct an incoming call to a call holding point (20), to translate the called telephone subscriber number via the look-up table into a pager number, to contact the called subscriber via the pager system (14), and to reserve a number in the mobile telephone facility (10) as a recall number.

6. A system as claimed in Claim 5, and further characterised in that when the called cordless subscriber moves within range it activates a recall sequence, and the identity of the called number is utilised to look up the call holding point where the originating call is held.

7. A system as claimed in Claim 6, and characterised in that a holding point (20) is a virtual location with a switch (11) in the mobile telephone facility (10) such that when a call is attached to a holding point its signalling capability is restricted to clearing the call.

# Fig.1.

# Fig. 2.

# Fig.3.

# Fig.4.

ORIGINAL CALL

20
CALL
HOLDING POINT

CALL
PICK-UP POINT

SWITCH EQUIPMENT

# Fig.5.

THE ORIGINAL CALL IS CONNECTED TO THE CALL HOLDING POINT.

ORIGINAL CALL

20 CALL
HOLDING POINT

CALL
PICK-UP POINT
21

SWITCH EQUIPMENT

# Fig.6.

THE RESPONDING CALL ARRIVES

ORIGINAL CALL

20
CALL
HOLDING POINT

CALL
PICK-UP POINT
21

RESPONDING CALL

SWITCH EQUIPMENT

# Fig.7.

THE RESPONDING CALL IS ROUTED TO THE CALL PICK-UP POINT

ORIGINAL CALL

CALL
HOLDING POINT

CALL
PICK-UP POINT

RESPONDING CALL

SWITCH EQUIPMENT

# Fig.8.

THE EFFECTIVE CONNECTION

ORIGINAL CALL

RESPONDING CALL

SWITCH EQUIPMENT